Europäisches Patentamt

European Patent Office

Office européen des brevets

(19)

(11) **EP 0 654 015 B1**

(12) **EUROPÄISCHE PATENTSCHRIFT**

(45) Veröffentlichungstag und Bekanntmachung des Hinweises auf die Patenterteilung:
**27.12.1996 Patentblatt 1996/52**

(21) Anmeldenummer: **93917537.8**

(22) Anmeldetag: **09.08.1993**

(51) Int Cl.6: **C02F 3/30**, C02F 3/12, C02F 3/10

(86) Internationale Anmeldenummer:
**PCT/DE93/00713**

(87) Internationale Veröffentlichungsnummer:
**WO 94/03402 (17.02.1994 Gazette 1994/05)**

(54) **VERFAHREN UND VORRICHTUNG ZUR BIOLOGISCHEN BEHANDLUNG VON ORGANISCH BELASTETEM ABWASSER UND ORGANISCHEM ABFALL**

PROCESS AND DEVICE FOR THE BIOLOGICAL TREATMENT OF ORGANICALLY POLLUTED WASTE WATER AND ORGANIC WASTE

PROCEDE ET DISPOSITIF POUR LE TRAITEMENT BIOLOGIQUE D'EAUX USEES A CHARGE ORGANIQUE ET DE DECHETS ORGANIQUES

(84) Benannte Vertragsstaaten:
**AT BE CH DE DK ES FR GB GR IE IT LI LU MC NL PT SE**

(30) Priorität: **10.08.1992 DE 4226416**
**12.03.1993 DE 4308408**

(43) Veröffentlichungstag der Anmeldung:
**24.05.1995 Patentblatt 1995/21**

(73) Patentinhaber: **PROTEC PARTNER FÜR UMWELTTECHNIK GMBH**
**92637 Weiden (DE)**

(72) Erfinder:
• **ZITZELSBERGER, Dorit**
**D-92637 Weiden (DE)**

• **AHNE, Gerd**
**D-06217 Merseburg (DE)**
• **WINTER, Josef**
**D-93080 Pentling (DE)**
• **BLEICHER, Karl**
**D-93182 Duggendorf (DE)**

(74) Vertreter: **Tergau, Enno, Dipl.-Ing. et al**
**Mögeldorfer Hauptstrasse 51**
**90482 Nürnberg (DE)**

(56) Entgegenhaltungen:
**US-A- 4 501 665       US-A- 4 904 387**
**US-A- 4 933 076**

**Beschreibung**

Die Erfindung betrifft ein Verfahren und eine Vorrichtung zur biologischen Behandlung von organisch belastetem Abwasser und organischem Abfall. Ziel derartiger Verfahren ist es, das organische Material unter weitgehender Volumenreduktion zu niedermolekularen, energiearmen Verbindungen abzubauen (Mineralisierung), die beispielsweise ins Erdreich oder in die Kanalisation abgegeben werden können ohne die Umwelt nennenswert zu belasten. Die Abwässer aus Toiletten beispielsweise enthalten im wesentlichen Kohlehydrate, C-Polymere, Proteine, Amine, Harnstoff, Ammoniak und Salze.

Während die kohlehydrathaltigen Bestandteile unter aeroben Bedingungen durch Mikroorganismen zu Kohlendioxid und Wasser zersetzbar sind, werden die reduzierten Stickstoffverbindungen von nitrifizierenden Mikroorganismen im wesentlichen zu Wasser und Nitrat abgebaut. Die bei derartigen aeroben Abbauprozessen erhaltene Flüssigkeit enthält demgemäß erhebliche Mengen an Nitrat. Ihre Einleitung in Flüsse oder Seen führt zu einer Nitrat-Überdüngung mit unerwünschten Folgeerscheinungen wie gesteigertes Algenwachstum. Da Nitrationen nur schlecht im Boden festgehalten und dementsprechend leicht von Regenwasser aus den oberflächennahen Bodenschichten ausgewaschen werden können, gefährdet die Ausbringung beispielsweise auf Ackerflächen das Grundwasser.

Es sind Verfahren bekannt, bei denen eine zusätzliche anaerobe Abbaustufe vorhanden ist, um wenigstens einen Teil des Nitrats durch denitrifizierende Mikroorganismen in unschädlichen elementaren Stickstoff umzuwandeln. Aus US-A-4 210 528 und US-A-4 904 387 ist ein Verfahren bekannt, bei dem das Abwasser von Toiletten zusammen mit den darin enthaltenen Feststoffanteilen in eine erste anaerobe Abbaustufe geführt und anschließend einer aeroben Behandlung unterzogen wird. Die Flüssigkeit aus der aeroben Stufe wird bei diesem Verfahren gefiltert, über ein Aktivkohlebett geleitet und als Spülwasser für die Toiletten verwendet. Auf diese Weise gelangt das nitrathaltige Wasser wieder in die anaerobe Abbaustufe und steht dort den denitrifizierenden Bakterien als Sauerstofflieferant für deren respiratorischen Stoffwechsel zur Verfügung.

Ein Nachteil des bekannten Verfahrens bzw. der bekannten Vorrichtung liegt darin, daß der Feststoffanteil, der den Hauptteil des abzubauenden organischen Materials ausmacht, ausschließlich unter anoxischen Bedingungen abgebaut wird. Mit dem Begriff anoxisch werden Biozönosen umschrieben, in deren Umgebung zwar chemisch gebundener Sauerstoff, z.B. in Form von Nitrat, jedoch kein gelöster Sauerstoff vorhanden ist. Der Abbau unter den genannten Bedingungen erfolgt durch Miroorganismen, die ihren Sauerstoffbedarf durch Reduktion des Nitrats decken. Dieser Vorgang wird allgemein als Denitrifikation bezeichnet. Der Abbau bei dem bekannten Verfahren ist somit von der Anwesenheit von Nitrat abhängig. Um einen vollständigen Abbau zu erreichen, müßte der Anteil an Stickstoffverbindungen Werte erreichen, die in üblichen und vor allem in kommunalen Abwässern nicht gegeben sind. Die Folge ist, daß nach dem Verbrauch der Stickstoffverbindungen Sulfatreduktion und anaerobe Abbauvorgänge einsetzen. Neben der damit verbundenen Entwicklung von Schwefelwasserstoff ist vor allen Dingen nachteilig, daß die anaeroben Zersetzungsvorgänge wesentlich langsamer ablaufen. Es sind also sehr lange Verweilzeiten bzw. große Reaktionsräume nötig, um eine ausreichende Abbaurate zu erreichen. Ein weiterer Nachteil des bekannten Verfahrens besteht darin, daß die Rückführung nitrathaltiger Flüssigkeit aus der aeroben Abbaustufe in die anoxische an die Benutzung der Toiletten gekoppelt ist. Eine länger andauernde Nichtbenutzung der Toilette führt einerseits zu einem Nitratmangel in der anoxischen Stufe und zu einer Zunahme von anaeroben Abbauvorgängen, deren Endprodukte Gase wie Methan, Schwefelwasserstoff und Mercaptane sind. Diese Gase gelangen in die Umwelt und tragen, abgesehen davon, daß sie stark geruchsbelästigend sind, u.a. zur Zerstörung der Ozonschicht bei. Ein weiterer Nachteil der bekannten Vorrichtung besteht darin, daß die in die anoxische Abbaustufe eingeführten Feststoffanteile zerkleinert werden müssen, um vertretbare Abbauraten erreichen zu können. Zu diesem Zweck sieht die bekannte Vorrichtung ein intermittierend motorisch angetriebenes Rührwerk vor, das Energie verbraucht und störanfällig ist.

Davon ausgehend ist es die Aufgabe der Erfindung, eine Vorrichtung und ein Verfahren zur biologischen Behandlung von organisch belasteten Abwässern und organischen Abfällen vorzusehen, welche die Nachteile des Standes der Technik nicht aufweisen und für mobile Toiletten-Anlagen geeignet sind.

Diese Aufgabe wird durch die kennzeichnenden Merkmale des Anspruches 1 gelöst. Bei dem erfindungsgemäßen Verfahren wird der Feststoffanteil beispielsweise von Toilettenabwässern oder organischem Naßmüll aus Küchen etc. abgetrennt und in einer ersten Abbaustufe unter vorwiegend aeroben Bedingungen zersetzt. Der flüssige Anteil wird in eine sich anschließende zweite Abbaustufe geleitet, in der anoxische Bedingungen herrschen. Nach dem Durchlaufen dieser Abbaustufe wird die Flüssigkeit schließlich in eine dritte Abbaustufe geleitet, in der wieder aerobe Bedingungen herrschen. Zur Erhöhung der Abbauraten sind nach Anspruch 2 zumindest in der zweiten und dritten Stufe biologisch aktive Trägerstrukturen vorhanden, die den Mikroorganismen als Aufwuchsflächen dienen. Die Flüssigkeit aus der dritten Stufe wird zur Aufrechterhaltung einer stetigen Umwälzung in die erste Stufe zurückgeführt.

Ein Vorteil des erfindungsgemäßen Verfahrens liegt darin, daß die in relativ großen Mengen anfallenden Feststoffe vorwiegend aerob und damit beschleunigt und praktisch ohne Entwicklung von Gasen wie Methan und Schwefelwasserstoff, wie dies bei anaeroben Abbauvorängen der Fall ist, abgebaut werden. Die stetig aus der dritten Abbaustufe in die erste Abbaustufe zurückgeführte nitrat- und sauerstoffhaltige Flüssigkeit gelangt auf die dort vorhandene Feststoffansammlung und durchfeuchtet sie. Dadurch werden aufgrund des Sauerstoffgehaltes der Flüssigkeit aerobe Stoffwechselvorgänge in den oberflächennahen Bereichen der Feststoffansammlung unterstützt. Die Flüssigkeit dringt auch in oberflächenferne Schichten der Feststoffansammlung ein. Darin enthaltenes Nitrat wird dort zu elementaren Stickstoff reduziert (Denitrifikation). Auf diese Weise werden Methan und Schwefelwasserstoff erzeugende Stoffwechselvorgänge unterdrückt. Die in die erste Abbaustufe zurückgeführte Flüssigkeit wird dort mit löslichen Abbauprodukten wie Zucker und Fettsäuren angereichert und gelangt in die zweite Abbaustufe. Hier findet dann eine Denitrifikation des Nitrats statt, d.h. die denitrifizierenden Mikroorganismen bzw. Denitrifikanten entziehen den zur "Veratmung" von C-Verbindungen notwendigen Sauerstoff dem Nitrat-Ion.

In der dritten Stufe findet schließlich ein aerober Abbau von C-Verbindungen zu Kohlendioxid und Wasser sowie eine Nitrifikation von N-Verbindungen, d.h. eine Oxidation zu Nitrat, statt. Aufgrund der ständigen Umwälzung wird dieses hier entstandene Nitrat in der zweiten Abbaustufe wiederum zu elementarem Stickstoff abgebaut. Im Endeffekt wird also praktisch der gesamte, in Form organischer Verbindungen gebundene Stickstoff in elementaren gasförmigen Stickstoff umgewandelt und aus dem Abbaukreislauf ausgeschleust.

Ein weiterer Vorteil des erfindungsgemäßen Verfahrens liegt darin, daß der Feststoffabbau in einer separaten Stufe unter erheblicher Volumenreduktion stattfindet. Dies schon alleine deshalb, weil ein Teil des Wassergehaltes der Feststoffe, der bei Pflanzenmaterial bis zu 98% beträgt, verdunsten kann. Die Verdunstung des Wassers wird durch die aufgrund der Stoffwechselvorgänge der Mikroorganismen erhöhte Temperatur in der Festtoffansammlung noch unterstützt. Bei den Verfahren nach dem Stande der Technik, bei denen der Feststoffanteil in der Flüssigphase suspendiert ist, ist dies nicht möglich. Ein weiterer Grund für die starke Volumenreduktion liegt darin, daß als Endprodukte der aeroben Abbauvorgänge gasförmiges Kohlendioxid und Wasser entstehen, wobei zumindest ein Teil des Wassers ebenfalls verdunstet.

Ein weiterer Vorteil des erfindungsgemäßen Verfahrens liegt darin, daß nicht abbaubare, beispielsweise über die Toilette eingeschleuste Fremdkörper, schon in der ersten Stufe, wo sie praktisch weiter nicht stören, zurückgehalten werden. Derartige Fremdkörper können nämlich bei mit Feststoffsuspensionen arbeitenden Verfahren Filter und biologisch aktive Trägerstrukturen verstopfen. Dies kann im Extremfall zum Stillstand einer Anlage führen. Ein weiterer Vorteil des erfinungsgemäßen Verfahrens liegt schließlich darin, daß der Anfall von Schlamm in der Flüssigphase, also in den Kompartimenten 2 und 3, gegenüber mit Feststoffsuspensionen arbeitenden Verfahren erheblich geringer ist. Erhöhte Schlammentwicklung kann zur Verstopfung von Filtern und Trägerstrukturen führen und hat einen erhöhten Wartungs- und Reinigungsaufwand zur Folge.

Durch die Maßnahme gemäß Anspruch 3 wird zum einen gewährleistet, daß die Mikroorganismen stets eine ausreichende Menge an Spurenelementen zur Verfügung haben. Solche Spurenelemente wie Calcium, Magnesium, Kobalt, Nickel und Eisen (Mikroelemente) werden von den Bakterien u.a. zum Aufbau körpereigener Substanzen benötigt. Diese Maßnahme trägt also dazu bei, daß die Mikroorganismen optimale Bedingungen vorfinden, was sich in einer gesteigerten Vermehrungs- und damit Abbaurate auswirkt. Zum anderen weisen die Mineralstoff- bzw. Aktivkohleteilchen aufgrund ihrer Porosität eine große innere Oberfläche auf, die den Mikroorganismen als zusätzliche Aufwuchsfläche dienen kann. Aktivkohleteilchen weisen darüberhinaus die weiter unten genannten Vorteile auf.

Die dem Anspruch 4 zugrundeliegende Lehre hat mehrere Vorteile. Zum einen dient die Aktivkohleschüttung als "Kohlenstoff-Speicher". Sie hat nämlich die Eigenschaft, Kohlenstoffverbindungen zu adsorbieren. Dies hat den Effekt, daß die in der anoxischen Abbaustufe vorhandenen Denitrifikanten stets auf ein Kohlenstoff- und Energiereservoir zurückgreifen können. Dieser Effekt kommt insbesondere dann zum Tragen, wenn längere Zeit kein neues organisches Material dem System zugeführt wird. Ein weiterer Vorteil der Aktivkohle-Schüttung liegt darin, daß sie gewissermaßen als "Puffer" für Belastungsschwankungen wirkt. Bei starker Belastung wird nämlich ein Teil der gelösten organischen Verbindungen adsorptiv zurückgehalten und Belastungsspitzen in der sich anschließenden aeroben dritten Abbaustufe verhindert. Dort laufen zwei um Sauerstoff konkurrierende Vorgänge, nämlich einerseits der oxidative Abbau von Kohlenstoffverbindungen und andererseits die Nitrifikation von N-Verbindungen ab. Eine starke Erhöhung der Konzentration an abbaubaren Kohlenstoffverbindungen hemmt naturgemäß die parallel ablaufende Nitrifikation. Dies würde zu einer Verringerung der Nitratkonzentration und letzlich zu einer Hemmung der Denitrifikation im Kompartiment 2 führen.

Schließlich ist es auch vorteilhaft, daß die Aktivkohle-Schüttung gleichzeitig als biologische Trägerstruktur, d.h. als Aufwuchsmaterial für die Mikrooranismen dient. Nach Anspruch 5 werden in vorteilhafter Weise die Maßnahmen gemäß Anspruch 3 und 4 kombiniert.

Die Lehre des Anspruches 6 gewährleistet, daß bei der biologischen Behandlung von Toilettenabwasser kein zusätzliches Wasser durch die Spülung in das System gelangt. Dies würde zum einen zu einer Verringerung der Verweildauer führen bzw. hätte zur Folge, daß entsprechend größere Reaktionsräume zur Verfügung stehen müßten. Zum anderen müßte zur Toilettenspülung wertvolles Trinkwasser verwendet werden.

Durch eine Filterung und Entkeimung wird bewirkt, daß die aus der Abbaustufe 3 abgezogene und zum Spülen der Toiletten verwendete bzw. an die Umwelt abgegebene Flüssigkeit in hygienisch einwandfreiem Zustand ist. Der Vorteil einer UV-Behandlung liegt insbesondere darin, daß sie sehr effektiv ist, einen geringen Energiebedarf aufweist und sehr wartungs- und umwelffreundlich ist. Es sind aber auch Verfahren wie Pasteurisierung oder anodische Oxidation einsetzbar.

Die Filtration und Entkeimung kann auch durch eine Cross-Flow-Filtration erreicht werden. Dieses Verfahren ist im Gegensatz zu konventionellen Filterverfahren, bei denen die Filter immer wieder gereinigt bzw. ausgetauscht werden müssen, praktisch wartungsfrei. Je nach Art der eingesetzten Membranfilter kann eine Mikro- oder Ultrafiltration erreicht werden. Im letztgenannten Fall können sogar kleinste Mikroorganismen, wie Viren, aus der zur Toilettenspülung verwendeten oder an die Umwelt abgegebenen Flüssigkeit herausgefiltert werden.

Da Aktivkohle ein hydrophobes Adsorbens ist, werden daran hauptsächlich unpolare Verbindungen oder solche mit hydrophoben Gruppen adsorbiert, wie aus den Fäkalien und aus Küchenabfällen stammende Fette, Fettsäuren und Öle. Diese Verbindungen werden somit an der Oberfläche der Aktivkohle konzentriert, wodurch sich dort eine auf den Abbau dieser Verbindungen spezialisierte Flora ausbildet. Die Folge ist ein effektiverer Abbau dieser Verbindungen. Kommunale Abwässer enthalten im Gegensatz zu Toilettenabwasser und organischen Abfällen nicht unerhebliche Mengen an relativ schwer abbaubaren waschaktiven Substanzen und Konservierungsmitteln, also Tenside und Stoffe wie etwa chlorierte Aromaten, Formaldehyd, Aromaten, Benzoe- und Sorbinsäure. Auch diese Verbindungen werden bevorzugt an Aktivkohle adsorbiert. Durch die Einschaltung eines weiteren aeroben Kompartiments mit Aktivkohleschüttung zwischen dem zweiten, anoxischen und dem dritten, aoeroben Kompartiment gemäß den Ansprüchen 7, 8 und 19 und 20 wird ein Abbauraum geschaffen, in dem sich eine auf den Abbau der genannten Verbindungen spezialisierte Biozönose ausbilden kann. Die Adsorption an der Aktivkohle bewirkt, wie bereits oben erwähnt, eine Konzentrierung der schwer abbaubaren Verbindungen und damit eine Erhöhung der Effektivität des Abbaus. Ein weiterer Vorteil der genannten Maßnahmen besteht darin, daß durch die Adsorption die Aufenthaltszeit im Kompartiment verlängert wird. Dies wiederum wirkt sich positiv auf die Ansiedelung und Vermehrung spezialisierter Mikrorganismen aus. Die genannten Verbindungen werden in dem zwischengeschalteten Kompartiment zurückgehalten und abgebaut. Sie gelangen deshalb nicht oder nur in geringem Ausmaß in das nachfolgende aerobe Kompartiment. Die dort angesiedelten Mikroorganismen sind daher vor der Tensid- und Kohlenwasserstofffracht des Abwassers geschützt. Durch die Zwischenschaltung eines weiteren Kompartiments gemäß den Ansprüchen 9, 8, 19 und 20 werden also zwei aerobe Abbauräume mit unterschiedlicher Flora geschaffen, wobei in dem zwischengeschalteten Kompartiment die schwer abbaubare Schmutzfracht des Abwassers zurückgehalten und durch spezialisierte Mikroorganismen abgebaut wird.

In Anspruch 9 ist eine zur Durchführung des erfindungsgemäßen Verfahrens geeignete Vorrichtung angegeben. Vorteilhafte Ausgestaltungen gehen aus den den Ansprüchen 10 bis 20 hervor. In Anspruch 10 ist eine Anordnung der Kompartimente angegeben, die insbesondere dann vorteilhaft ist, wenn eine erfindungsgemäße Vorrichtung in Einrichtungen mit knapper Nutzfläche, beispielsweise Reisezugwagen oder Wohnmobile, eingebaut werden soll.

Das in Anspruch 11 angegebene Kunststoff-Sintermaterial läßt sich einfach und kostengünstig herstellen. Es eignet sich auch sehr gut dafür, poröse Teilchen aus Mineralstoffen und/oder Aktivkohle in einfacher Weise mit einzusintern. Die Vorteile einer solchen Maßnahme wurden bereits weiter oben beschrieben.

Durch Anspruch 13 ist gewährleistet, daß das zweite Kompartiment und die darin befindlichen Trägerstruktur und Aktivkohle-Schüttung stets mit Flüssigkeit überflutet sind. Dadurch können strikte anoxische Bedingungen aufrecht erhalten werden.

Anspruch 14 gibt vorteilhafte Ausgestaltungen des im ersten Kompartiment angeordneten Filters an. Von Vorteil ist insbesondere, daß die im Filter eingebetteten porösen Teilchen aus Mineralstoffen ein Depot für Spurenelemente bilden, auf das die den Feststoffanteil abbauenden Mikroorganismen zurückgreifen können. Die eingelagerten porösen Teilchen haben darüber hinaus den Vorteil einer großen inneren Oberfläche und können daher neben den Kunststoff-Sinterteilchen zur Immobilisierung von Mikroorganismen dienen. Gleiches gilt für im Sintermaterial eingelagerte Aktivkohleteilchen.

Im dritten Kompartiment sind gemäß Anspruch 15 Mittel zum Einblasen von Luft vorgesehen, um in der Flüssigkeit einen ausreichend hohen Sauerstoffgehalt aufrecht zu erhalten. Die aus der Flüssigkeit im Kompartiment 3 entweichende Luft wird vorteilhafterweise zur Unterstützung des aeroben Feststoffabbaus im Kompartiment 1 verwendet. Besonders effektiv ist diese Maßnahme, wenn die Luft innerhalb der Feststoffansammlung möglichst gleichmäßig verteilbar ist.

Die Erfindung wird nun anhand von in den beigefügten Zeichnungen dargestellten Ausführungsbeispielen näher erläutert. Es zeigen:

| Fig. 1 | eine Ausführungsform der erfindungsgemäßen Vorrichtung in schematischer Darstellung, |
| Fig. 2 | ein weiteres Ausführungsbeispiel der erfindungsgemäßen Vorrichtung in schematischer Darstellung, |
| Fig. 3 | eine schematisierte Teilansicht einer erfindungsgemäßen Vorrichtung mit einer vorteilhaften Ausgestaltung der biologisch aktiven Trägerstrukturen im dritten Kompartiment, |
| Fig. 4 | ein Ausführungsbeispiel mit integrierter Toilette, in schematisierter Darstellung, |
| Fig. 5 | ein Ausführungsbeispiel mit integrierter Toilette und einer Cross-Flow-Filtration in schematisierter Darstellung, |
| Fig. 6 | ein Ausführungsbeispiel entsprechend Fig. 4 mit einem zusätzlichen aeroben Kompartiment, |

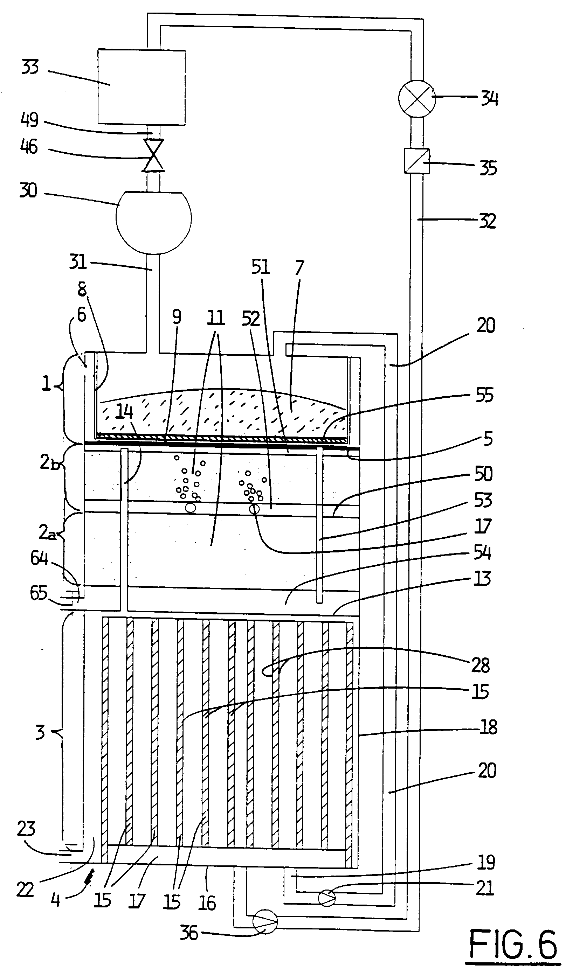

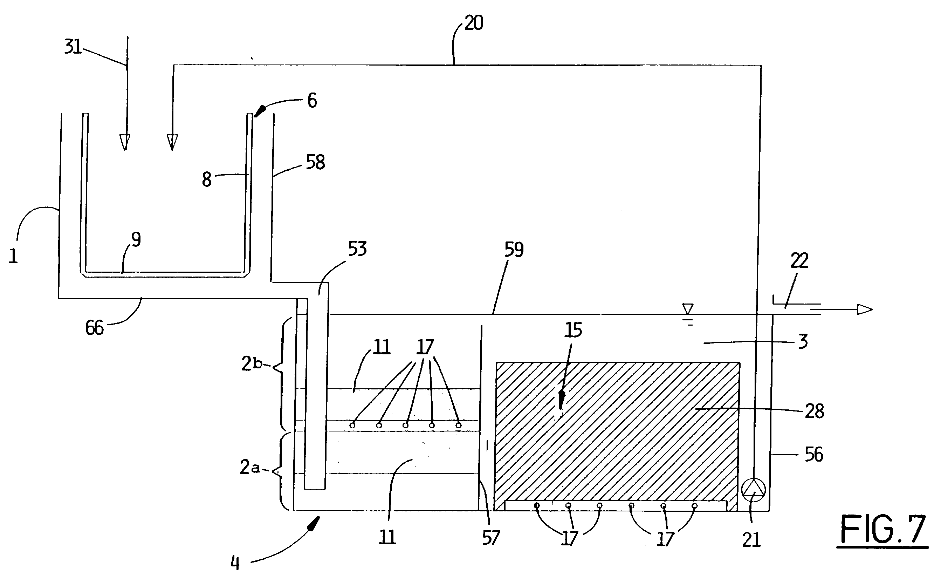

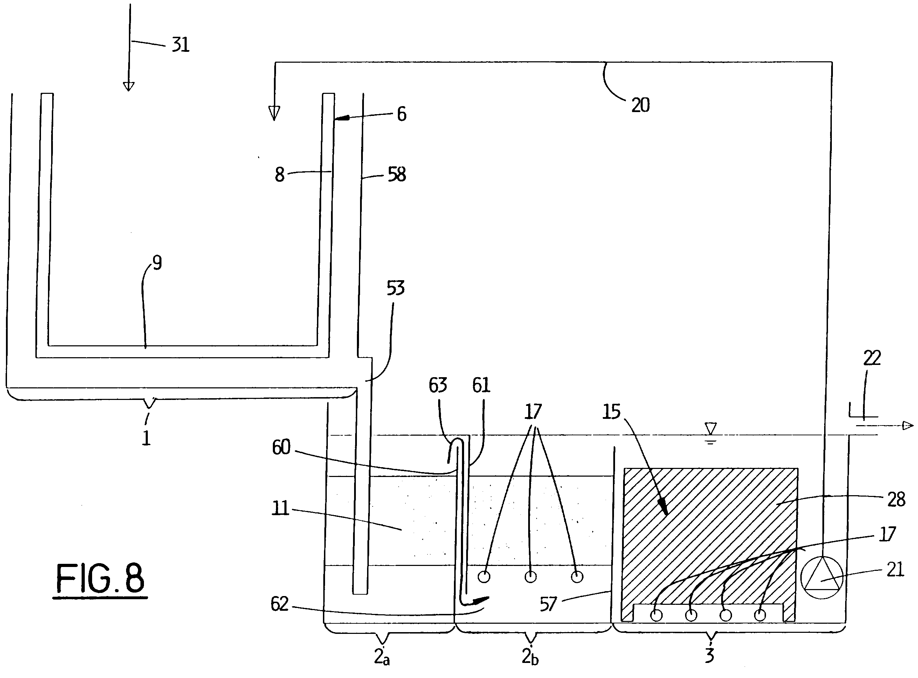

Fig. 7 und 8 ein Ausführungsbeispiel gemäß Fig. 6 mit alternativen Relativ-Anordnungen der Kompartimente.

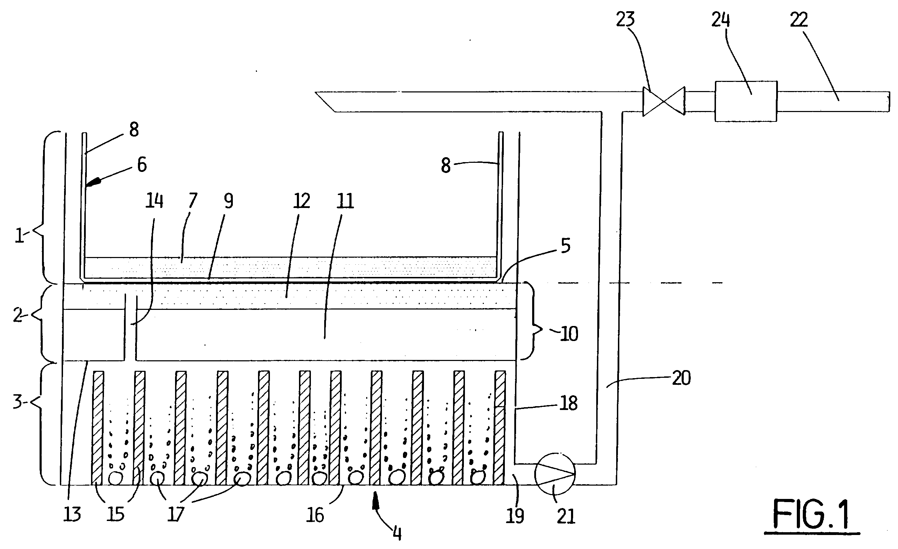

Wie aus Fig. 1 hervorgeht, enthält die erfindungsgemäße Vorrichtung insgesamt 3 Kompartimente (1,2,3) die zusammen einen Bioreaktor 4 bilden. Das zuoberst angeordnete Kompartiment 1 steht mit der Außenluft in Verbindung und ist für einen aeroben Abbau ausgelegt Das darunter angeordnete Kompartiment 2 dient für einen anoxischen und das unterste Kompartiment 3 schließlich wiederum für einen aeroben Abbau. Zwischen den Kompartimenten 1 und 2 ist eine horizontal verlaufende Trennwand 5 angeordnet, die flüssigkeitsdurchlässig ist Im Kompartiment ist ein nach oben offener Filterkorb 6 angeordnet, der zum Abtrennen der Feststoffanteile aus dem der Vorrichtung zugeführten Abwasser dient. Die Feststoffanteile setzen sich im Filterkorb 6 nach Art eines Filterkuchens 7 ab. Der Filterkorb weist vertikale Seitenwände 8 und einen horizontal verlaufenden Boden 9 auf. In der einfachsten Ausführungsform können die Seitenwände 8 und der Boden 9 aus einem Drahtgeflecht bestehen. Es ist aber auch vorgesehen, zumindest den Boden 9 aus einem Kunststoff-Sintermaterial herzustellen. Als Kunststoff kommt beispielsweise Polyethylen in Betracht. Ein derartiges Sintermaterial wird durch Zusammensintern der Kunststoffteilchen erhalten. Dabei entsteht ein von Hohlräumen bzw. Poren durchsetztes Material. Derartige Materialien werden in anderen technischen Bereichen beispielsweise als Luftfilter eingesetzt. Eine weitere Ausgestaltungsmöglichkeit für den Filterkorb 6 besteht darin, eine Schicht aus dem genannten Sintermaterial auf den Drahtgeflechtboden 9 des Filterkorbes 6 aufzulegen. Schließlich ist es auch denkbar, den gesamten Filterkorb 6 aus einem Kunststoff-Sintermaterial herzustellen. Im Kunststoff-Sintermaterial können Mineralstoff- und/oder Aktivkohle-Teilchen eingelagert sein. Derartige Teilchen sind porös und stellen zusätzliche Aufwuchsfläche für Mikroorganismen zur Verfügung. Darüber hinaus fungieren die Mineralstoffteilchen als Depot für Spurenelemente.

Es ist auch denkbar, anstelle des einen zwei Filterkörbe zu verwenden und nacheinander zu beschicken. Dasselbe könnte auch mit einem in zwei Hälften unterteilten Filterkorb erreicht werden. Schließlich ist es auch möglich, den Filterkorb auswechselbar im Kompartiment 1 anzuordnen. Dies hätte den Vorteil, daß er bei der tumusmäßigen Reinigung der Vorrichtung ganz einfach gegen einen gereinigten Filterkorb ausgewechselt werden könnte.

Unterhalb des aeroben Kompartiments 1 ist das Kompartiment 2 angeordnet, in dem anoxische Abbaubedingungen herrschen. Im unteren Teil 10 des Kompartiments 2 ist als biologisch aktive Trägerstruktur eine sich praktisch über dessen gesamte Querschnittsfläche erstreckende Schüttung 11 aus Aktivkohlekörnern angeordnet. In dem sich über der Aktivkohleschüttung 11 befindlichen Restraum des Kompartiments 2 ist eine sich ebenfalls praktisch über die gesamte Querschnittsfläche des Kompartiments erstreckende und im wesentlichen parallel zum Boden 9 des Filterkorbes verlaufende Schicht aus einer biologisch aktiven Trägerstruktur 12 angeordnet, die im wesentlichen aus einem Polyethylen-Sintermaterial besteht. In dieses Sintermaterial sind Teilchen aus porösen Mineralstoffen, wie Blähton, Schlacke oder Tuffgestein, eingelagert. Daneben können auch Aktivkohleteilchen eingelagert sein. Die Funktion dieses Filters und der darin eingelagerten Teilchen wird weiter unten beschrieben.

Das Kompartiment 2 ist vom darunter angeordneten Kompartiment 3 durch eine gas- und flüssigkeitsdichte Trennwand 13 abgetrennt. Die Verbindung zwischen den beiden Kompartimenten wird durch ein im Kompartiment 2 angeordnetes und mit dem Kompartiment 3 verbundenes Überlaufrohr 14 gewährleistet Dieses Überlaufrohr 14 erstreckt sich im wesentlichen über die gesamte Höhe des Kompartiments 2, so daß die darin befindlichen Aktivkohleschüttung 11 und Trägerstruktur 12 mit Flüssigkeit überstaut sind. Im Kompartiment 3 sind ebenfalls biologisch aktive Trägerstrukturen 15 angeordnet Diese sind in Form von vertikal verlaufenden, parallel zueinander angeordneten und sich im wesentlichen über die gesamte Breite des Kompartiments 3 erstreckenden Wänden ausgebildet. Die vertikale Ausdehnung der Trägerstrukturen 15 ist etwas geringer als die lichte Höhe des Kompartiments 3. Zwischen den oberen Stirnseiten der Trägerstukturen 15 und der Trennwand 13 ist somit ein Zwischenraum vorhanden, der einen Flüssigkeitsstrom zuläßt. Die Trägerstrukturen 15 bestehen ebenfalls aus einem Polyethylen-Sintermaterial, in das Mineralstoff - und/oder Aktivkohle eingelagert sind. Am Boden 16 des Kompartiments 3 sind Belüftungsmittel 17 angeordnet. Diese können beispielsweise in Form von Rohren ausgebildet sein, die zwischen den Trägerstrukturen 15 angeordnet und an ihrer Oberseite perforiert sind. In die Rohre eingeblasene Luft tritt durch die Perforierung der Rohre aus und löst sich zum Teil in der Flüssigkeit. Die überschüssige, sich unterhalb der Trennwand 13 sammelnde Luft ist durch eine Öffnung (nicht dargestellt) im Kompartiment 3 abführbar.

In dem an den Boden 16 angrenzenden unteren Bereich der Seitenwand 18 des Kompartiments 3 ist eine Abflußöffnung 19 vorhanden, die mit einer Umwälzleitung 20 verbunden ist Die Umwälzleitung 20 ist nach oben in das Kompartiment 1 geführt und mündet dort. Zur Aufrechterhaltung eines Umwälz-Flüssigkeitsstroms ist in der Umwälzleitung 20 eine Umwälzpumpe 21 angeordnet. Von der Umwälzleitung 20 zweigt eine Auslaßleitung 22 ab, mit der bei Erreichen einer bestimmten Füllstandshöhe im Kompartiment 3 Flüssigkeit aus dem Kompartiment 3 abgelassen werden kann. Zu diesem Zweck weist die Auslaßleitung 22 ein Ventil 23 auf, das über einen Füllstandssensor im Kompartiment 3 (nicht dargestellt) angesteuert ist. Zwischen dem Ventil 23 und der Auslaßleitung 22 ist außerdem eine Hygenisierungs- und Filtereinheit 24 zwischengeschaltet.

Anhand des in Fig. 1 dargestellten Ausführungsbeispiels wird nun die Arbeitsweise des erfindungsgemäßen Verfahrens erläutert:

Das beispielsweise einer oder mehreren Toiletten entstammende Abwasser wird über eine Zulaufleitung (nicht dargestellt) dem Kompartiment 1 zugeführt. In dem darin angeordneten Filterkorb 6 wird der Feststoffanteil des Abwassers (Fäkalien, Toilettenpapier etc.) zurückgehalten, wodurch sich mit fortschreitender Betriebsdauer eine Feststoff-Ansammlung nach Art eines Filterkuchens 7 aufbaut. Die aus dem Kompartiment 1 ablaufende Flüssigkeit gelangt zunächst in das Kompartiment 2 und dann über das Ablaufrohr 14 in das Kompartiment 3. Das Kompartiment 1 steht mit der Umwelt in Verbindung, so daß ein Zutritt von Luftsauerstoff zur Aufrechterhaltung von aeroben Bedingungen gewährleistet ist. Wie weiter unten noch gezeigt wird, kann zur Unterstützung des aeroben Abbaus insbesondere im Falle von größeren Feststoffmengen eine Zwangsbelüftung des Filterkuchens 7 erfolgen.

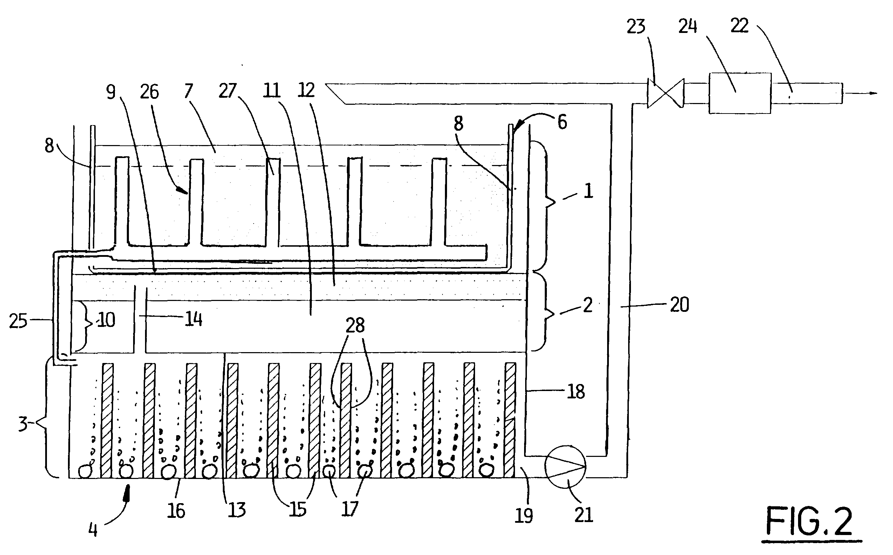

In den oberflächennahen Bereichen des Filterkuchens 7 bzw. in den Bereichen, die in der Nähe von den (weiter unten beschriebenen) Zwangsbelüftungsmittel (Luftverteiler 26 in Fig. 2) liegenden Bereichen herrschen aerobe Bedingungen vor. Hier findet im wesentlichen ein oxidativer Abbau von organischen Kohlenstoff- und Stickstoffverbindungen (Kohlenhydrate, Fette, Proteine) statt. Beide Vorgänge lassen sich exemplarisch durch folgende vereinfachte Summenformeln darstellen:

$$\text{I} \qquad C_6H_{12}O_6 + 6\,O_2 \qquad \rightarrow 6\,CO_2 + 6\,H_2O$$

Ammonifikation:

$$\text{II} \qquad R\text{-}NH_2 + 2\,H_2O \qquad \rightarrow NH_4^+ + R\text{-}OH + OH^-$$

$$\text{III} \quad NH_2\text{-}CO\text{-}NH_2 + 3\,H_2O \rightarrow CO_2 + 2\,NH_4^+ + 2\,OH^-$$

Nitrifikation:

$$\text{IV} \qquad 2\,NH_4^+ + 3\,O_2 \qquad \rightarrow 2\,NO_2^- + 2\,H_2O + 4\,H^+$$

$$\text{V} \qquad 2\,NO_2^- + O_2 \qquad \rightarrow 2\,NO_3^-$$

Die Summengleichungen IV und V stellen die bei der sog. Nitrifikation ablaufenden Vorgänge dar. Der erste Reaktionschritt gemäß IV wird z.B. von Nitrosomonas und der zweite gemäß V z.B. von Nitrobacter durchgeführt.

In tieferliegenden, nicht mit Sauerstoff versorgten Schichten, finden anaerobe und anoxische Abbauvorgänge statt, die sich am Beispiel Glucose vereinfacht etwa wie folgt wiedergeben lassen:

$$\text{VI} \qquad C_6H_{12}O_6 \qquad \rightarrow 3\,CO_2 + 3\,CH_4 \ (minimal)$$

$$\text{VII} \qquad C_6H_{12}O_6 \qquad \rightarrow \text{Fettsäuren, Alkohole, Ketone}$$

Denitrifikation:

$$\text{VIII} \qquad \text{Fettsäuren, Alkohole, Ketone} + NO_3^- \qquad \rightarrow N_2 + CO_2 + H_2O$$

Das durch die Denitrifikation (VIII) in den anaeroben Zonen des Filterkuchens zu Stickstoff umgewandelte Nitrat stammt hauptsächlich aus der mittels der Umwälzleitung 20 dem Kompartiment 1 zugeführten Flüssigkeit aus Kompartiment 3 und zum Teil aus der Nitrifikation in den aeroben Zonen des Filterkuchens 7. Aufgrund der Anwesenheit von Nitrat ist die Methanbildung gemäß VI zugunsten der Denitrifikation zurückgedrängt.

Im Kompartiment 2 herrschen anoxische Bedingungen vor. Die Flüssigkeit in diesem Kompartiment enthält im wesentlichen Nitrat und organische C-Verbindungen, die teils aus dem zugeführten Toiletten-Abwasser, teils aus den im Feststoff-Kompartiment 1 ablaufenden Abbauvorgängen stammen. Unter den vorherrschenden anoxischen Bedingungen erfolgt ein Abbau von Nitrat/Nitrit zu elementarem Stickstoff (Denitrifikation). Der gasförmige Stickstoff wird über eine Öffnung im Kompartiment 2 (nicht dargestellt) nach außen geführt. Bei der Denitrifikation, die wegen der Parallelität zur Sauerstoff-Atmung auch als "Nitrat-Atmung" bezeichnet wird, dient das Nitrat-Ion als Sauerstoff-Liefe-rant bzw. als terminaler Wasserstoff-Akzeptor. Die bei der "Veratmung" von Verbindungen wie Fettsäuren, Alkoholen oder Zuckern ablaufenden Abbauvorgänge lassen sich vereinfacht etwa wie folgt wiedergeben:

$$IX \qquad \text{Organische Fettsäuren, Zucker, etc.} + NO_3^- \rightarrow CO_2 + N_2 + H_2O$$

$$X \qquad CH_3\text{-}COOH + HNO_3 \qquad \rightarrow 2\,CO_2 + 1/2\,N_2 + H_2O$$

$$XI \qquad 5CH_3\text{-}CH_2COOH + 14HNO_3 \qquad \rightarrow 15CO_2 + 7N_2 + 22H_2O$$

$$XII \qquad C_6H_{12}O_6 \qquad \rightarrow 3\,CO_2 + 3\,CH_4 \text{ (minimal)}$$

Die Methanbildung ist auch in diesem Kompartiment äußerst gering und praktisch vernachlässigbar.

Die im Kompartiment 2 angeordnete Aktivkohleschüttung 11 und die sich darüber befindliche Trägerstruktur 12 haben mehrere Funktionen. Sie dienen zum einen als Aufwuchsmaterial für Mikroorganismen, d.h. ihre äußere und zumindest teilweise auch innere Oberfläche überzieht sich nach einiger Gebrauchsdauer mit einem Bakterienrasen. Die Aktivkohleschüttung 11 hat darüber hinaus noch die Funktion eines "Kohlenstoff-Puffers". Aus dem Filterkuchen 7 herausgelöste organische C-Abbauprodukte bzw. im zugeführten Abwasser enthaltene lösliche organische C-Verbindungen und Farbstoffe aus Fäkalien oder aromatische und aliphatische Kohlenwasserstoffe werden durch die Aktivkohleschüttung 11 adsorptiv zurückgehalten. Die Aktivkohle hat nämlich die Eigenschaft, unpolare bzw. hydrophobe Verbindungen oder solche mit hydrophoben Gruppen zu adsorbieren, sie lädt sich gewissermaßen mit diesen Verbindungen auf. Damit werden zwei Effekte erreicht. Zum einen wird verhindert, daß im Falle von Belastungsspitzen, d.h. also größeren Mengen an zugeführtem Abwasser bzw. stark belastetem Abwasser, die Konzentration der genannten organischen C-Verbindungen im Kompartiment 3 zu sehr ansteigt. In diesem Kompartiment laufen nämlich, wie später noch gezeigt wird, zwei unterschiedliche um Sauerstoff konkurrierende Reaktionen ab, nämlich der oxidative Abbau von organischen Kohlenstoffverbindungen und parallel dazu die nach der Mineralisierung von organischen Stickstoffverbindungen ablaufende Nitrifikation. Naturgemäß würde die erstgenannte Reaktion mit zunehmender Konzentration der organischen Kohlenstoffverbindungen bevorzugt ablaufen, während die Nitrifikation entsprechend gehemmt wäre. Ein zweiter Effekt der "Pufferwirkung" liegt darin, daß im Falle eines länger ausbleibenden Abwassernachschubs in das Kompartiment 1 eine Verarmung an kohlenstoffhaltigen organischen Verbindungen kompensiert wird. Die Denitrifikanten können also auf die an der Aktivkohle adsorbierten Kohlenstoffverbindungen zurückgreifen und eine optimale Umsetzung von Nitrat zu elementarem Stickstoff gewährleistet.

Im dritten Kompartiment 3 herrschen wieder aerobe Bedingungen vor, die durch Einblasen von Luft (Belüftungsmittel 17) aufrechterhalten werden. Es laufen, ähnlich wie in den aeroben Bereichen des Filterkuchens 7 zwei unterschiedliche Abbauvorgänge ab. Im Einlaufbereich, d.h. also in dem Bereich in der Nähe der Mündung des Überlaufrohres 14 findet bevorzugt ein oxidativer Abbau des in der Flüssigkeit noch vorhandenen Restanteils an organischen Verbindungen statt. In den weiter vom Überlaufrohr 14 entfernten Bereichen überwiegt dagegen die Nitrifikation. Die Trägerstrukturen 15 des Kompartiments 3 dienen als Aufwuchsmaterial für Mikroorganismen.

Die in den Trägerstrukturen 12,15 bzw. ganz allgemein in das Polyethylen-Sintermaterial eingelagerten Mineralstoff- und/oder Aktivkohle-Teilchen bewirken, wie bereits weiter oben erwähnt, aufgrund ihrer inneren Oberfläche eine Vergrößerung der Aufwuchsfläche für die Mikroorganismen. Die Mineralstoffteilchen dienen darüber hinaus der Versorgung der Mikroorganismen mit Spurenelementen.

In Fig. 2 ist ein Ausführungsbeispiel dargestellt, bei dem die dem Kompartiment 3 zugeführte Luft über eine Sammelleitung 25 einem innerhalb des Filterkorbes 6 angeordneten Luftverteiler 26 zugeführt wird. Dieser Luftverteiler kann, z.B. wie in Fig. 2 schematisch dargestellt, perforierte Rohre 27 enthalten, die mit Abstand zueinander im Filterkorb 6 angeordnet sind und sich in Vertikalrichtung erstrecken. Auf diese Weise kann ein größerer Anteil des Filterkuchens 7 aerob abgebaut werden.

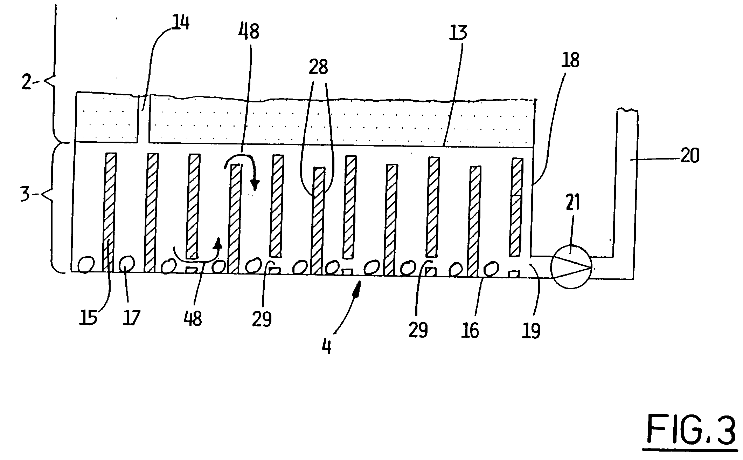

In Fig. 3 ist eine Ausführungsform einer erfindungsgemäßen Vorrichtung dargestellt, bei der jede zweite Trägerstruktur in ihrem unteren bodennahen Bereich eine Durchflußöffnung 29 und die sich zwischen zwei solchen Trägerstrukturen befindliche Trägerstruktur 15 eine geringere Höhe aufweist Die von der Mündung des Überlaufrohres 14 zur Abflußöffnung strömende Flüssigkeit ist somit gezwungen, den durch die Pfeile 48 angedeuteten Weg einzuschlagen. Der Vorteil dieser Ausgestaltung liegt darin, daß die von den Trägerstukturen 15 insgesamt zur Verfügung gestellte biologisch aktive Kontaktfläche effektiver genutzt wird.

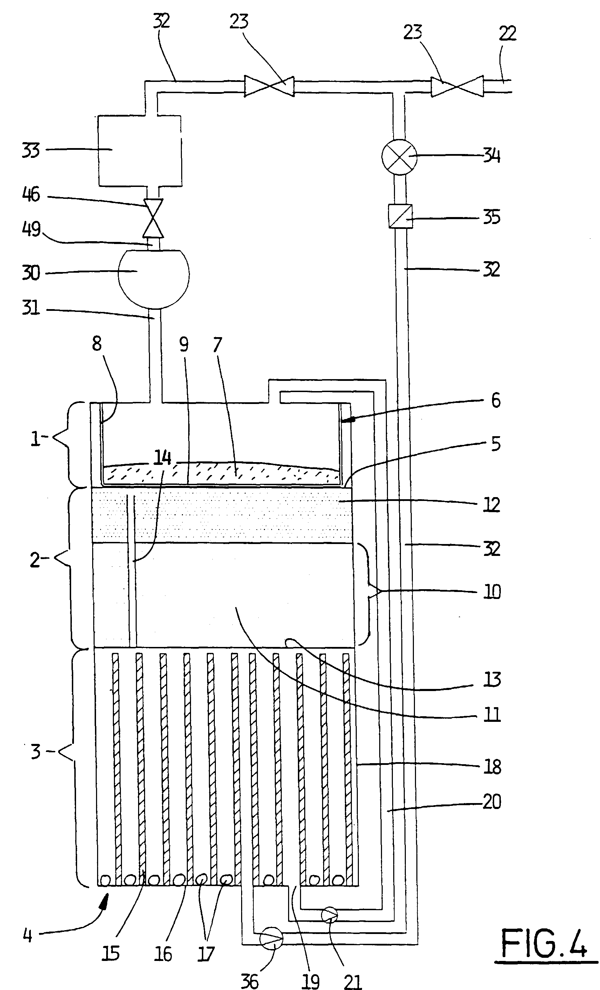

In Fig. 4 ist eine erfindungsgemäße Vorrichtung mit einer daran angeschlossenen Toilette dargestellt Diese Vorrichtung eignet sich insbesondere für Toilettenanlagen in Fahrzeugen, wie Reisemobile oder Reisezugwagen. Bei dieser Ausführungsform ist das Kompartiment 1 mit einer Toilette 30 über eine Zuführleitung 31 verbunden. Die Spülflüssigkeit für die Toilette wird dem Kompartiment 3 entnommen und über eine Spülwasserleitung 32 einem Vorratsbehälter 33 zugeführt, aus dem sie nach Bedarf zur Spülung der Toilette 30 entnommen werden kann.

Die Toilette 30 ist spülwasserseitig über eine Leitung 49 mit dem Vorratsbehälter 33 verbunden. In der Leitung 49 ist ein Ventil 46 angeordnet, das beispielsweise per Hand oder Fuß betätigbar ist.

Dem Vorratsbehälter 33 ist eine Hygienisierungseinrichtung 34 und ein Filter 35 vorgeschaltet. Mit dem Filter 35 sind feine Feststoffpartikel aus der aus dem Kompartiment 3 abgezogenen Flüssigkeit herausfilterbar. Es ist auch denkbar, diese Filtereinheit mit einem zusätzlichen Aktivkohlefilter zu versehen, mit dem z.B. in der Flüssigkeit gelöste Farbstoffe absorbiert werden können. Zur Entkeimung der Flüssigkeit in der Hygienisierungseinrichtung 34 kann auf verschiedene Weise verfahren werden. Als besonderes vorteilhaft hat sich eine UV-Bestrahlung erwiesen, da sie zuverlässig arbeitet und zudem einen relativ geringen Energieverbrauch hat. Zur Beförderung der Flüssigkeit aus dem Kompartiment 3 in den Vorratsbehälter 33 ist in der Spülwasserleitung 32 eine Pumpe 36 angeordnet Im Vorratsbehälter 33 ist eine Füllstandsregelung (nicht dargestellt) angeordnet, welche die Pumpe 36 bei einem minimalen Füllstand ein- und bei einem maximalen Füllstand ausschaltet. Die Umwälzung der Flüssigkeit innerhalb des Bioreaktors 4 ist bei diesem Ausführungsbeispiel auf die gleiche Weise gelöst wie bei den Ausführungsbeispielen gemäß Fig. 1 und 2. Das Ausschleußen von Flüssigkeit aus dem System erfolgt über eine nach der Hygienisierungseinheit 34 von der Spülwasserleitung 32 abzweigenden Auslaßleitung 22. Das Ventil 23' ist dabei geschlossen, das Ventil 23 dagegen geöffnet.

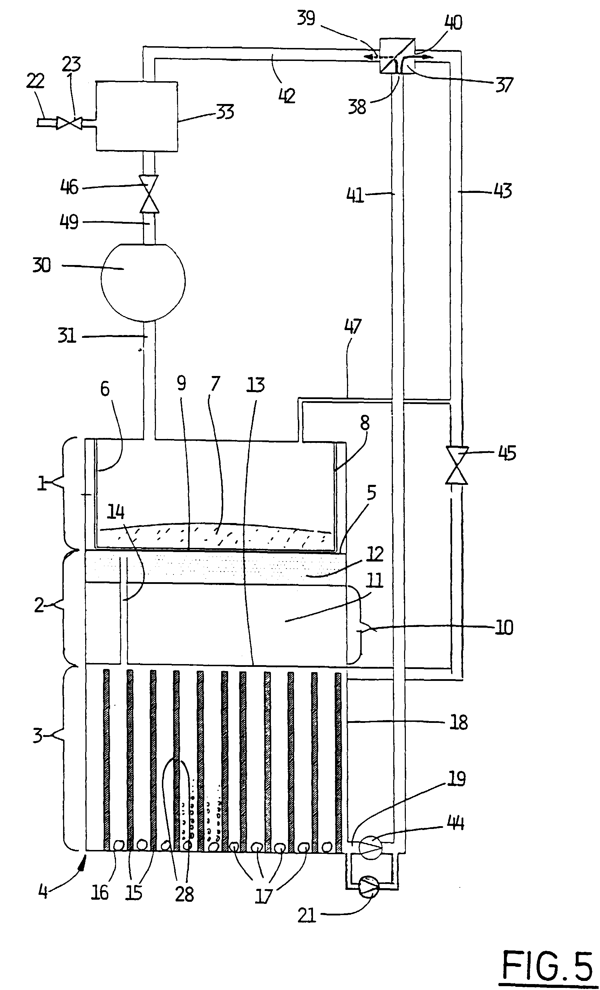

In Fig. 5 ist ein Ausführungsbeispiel mit einer integrierten Cross-Flow-Filteranlage dargestellt. Die Cross-Flow-Filteranlage enthält als wesentlichen Bestandteil ein Cross-Flow-Filter 37. Dieses weist einen Eingang 38 für die zu filtrierende Flüssigkeit aus Kompartiment 3, einen Permeatausgang 39 und einen Retentatausgang 40 auf. Der Eingang 38 ist über eine Hauptstromleitung 41 mit der Abflußöffnung 19 des aeroben Kompartiments 3 verbunden. Der Permeatausgang 39 ist über eine Permeatleitung 42 mit dem Vorratsbehälter 33 verbunden. Der Retentatausgang 40 schließlich ist über eine Retentatleitung 43 mit dem aeroben Kompartiment 3 verbunden. in der Retentatleitung 43 ist ein Ventil 45 angeordnet. Die Cross-Flow-Filteranlage arbeitet wie folgt: Die Flüssigkeit aus dem aeroben Kompartiment 3 wird mittels einer Hauptstrompumpe 44 zum Cross-Flow-Filter 37 transportiert. Die im Cross-Flow-Filter filtrierte Flüssigkeit, das Permeat, fließt über die Permeatleitung 42 zum Vorratsbehälter 33. Das Retentat dagegen fließt über die Retentatleitung 43 und das geöffnete Ventil 45 zum Kompartiment 3 zurück. In Richtung der Permeatströmung zweigt vor dem Ventil 45 eine Umwälzleitung 47 ab, die von oben in das aerobe Kompartiment 1 mündet. Der Querschnitt der Umwälzleitung 47 ist so ausgelegt, daß bei in Betrieb befindlicher Cross-Flow-Anlage ein der jeweiligen Auslegung des Bioreaktors 4 angepaßter Umwälzstrom gewährleistet wird.

Bei Erreichen eines bestimmten maximalen Flüssigkeitsstandes im Vorratsbehälter 33 wird durch eine geeignete Steuereinrichtung (nicht dargestellt) das Ventil 45 geschlossen und die Hauptstrompumpe 44 abgeschaltet. Um auch in diesem Betriebszustand eine stetige Umwälzung der Flüssigkeit im Bioreaktor 4 zu gewährleisten, ist in Parallelschaltung zur Hauptstrompumpe 44 eine Umwälzpumpe 21 angeordnet Diese wird bei Erreichen des maximalen Füllstandes im Vorratsbehälter 33 in Betrieb gesetzt. Auf diese Weise erfolgt über die Hauptstromleitung 41, die Retentatleitung 43 und die Umwälzleitung 47 eine Rückführung der Flüssigkeit aus dem aeroben Kompartiment 3 in das erste anaerobe Kompartiment 1. Anstelle von zwei verschiedenen Pumpen 44, 21 mit unterschiedlichen Förderleistungen kann natürlich auch eine zweistufige oder eine stufenlos regelbare Pumpe verwendet werden.

In einer Vorrichtung mit beispielswiese einem 400 Uter-Bioreaktor treten die in der folgenden Tabelle wiedergegebenen Flüssigkeitsströme auf:

Tabelle 1

| Hauptstrom | ca. 1500 l/h |
|---|---|
| Permeatstrom | 20 - 30 l/h |
| Retentatstrom | ca. 1460 l/h |
| Umwälzstrom | 15 l/h |

Das Ausschleusen von Flüssigkeit aus dem Bioreaktor wird bei dieser Ausführungsform durch eine mit einem Ventil 23 verschlossene Auslaßleitung 22 gewährleistet, welche am Vorratsbehälter 33 unterhalb des maximalen Füllstandes angesetzt ist. Bei Erreichen des maximalen Füllstandes sowohl im Kompartiment 3 als auch im Vorratsbehälter 33 wird über eine geeignete Steuereinrichtung (nicht dargestellt) die Umwälzpumpe 21 aus- und die Hauptstrompumpe 44 eingeschaltet sowie das Ventil 45 geöffnet. Der Permeatstrom wird über die Permeatleitung 42 in den Vorratsbehälter 33 geleitet und von dort über das zu diesem Zeitpunkt ebenfalls geöffnete Ventil 23 ausgeschleust.

In Fig. 6 ist ein Ausführungsbeispiel dargestellt, bei dem sich der Bio-Reaktor 4 aus insgesamt 4 Kompartimenten zusammensetzt. Unterhalb des Kompartiments 1 ist ein Kompartiment 2b angeordnet, in dem aerobe Bedingungen herrschen. Zur Aufrechterhaltung dieser Bedingungen sind in seinem bodennahen Bereich als perforierte Rohre ausgebildete Belüftungsmittel 17 angeordnet, durch die Luft eingeblasen wird. Als Aufwuchsmaterial für Mikroorganismen ist eine Aktivkohle-Schüttung 11 angeordnet, die sich praktisch über die gesamte Querschnittsfläche des Kompartiments 2b erstreckt. In Vertikalrichtung füllt sie den Raum des Kompartiments 2b jedoch nur in dessen Mittelbereich aus, so daß zwischen ihr und der Trennwand 5 zum Kompartiment 1 und der Trennwand 50 zum sich unterhalb anschließenden Kompartiment 2a jeweils ein aktivkohlefreier Zwischenraum 51,52 gebildet ist. In dem Zwischenraum 52 befinden sich die Belüftungsmittel 17.

An das Kompartiment 2b grenzt unterseits ein Kompartiment 2a an, welches ebenfalls eine Aktivkohle-Schüttung 11 enthält und durch die Trennwand 50 vom Kompartiment 2b abgetrennt ist Während diese Trennwand so flüssigkeits- und gasdurchlässig ist, ist die Trennwand 5 zwischen dem Kompartiment 1 und dem Kompartiment 2b gas- und flüssigkeitsdicht. Im Kompartiment 2a herrschen anoxische und im Kompartiment 2b aerobe Bedingungen vor.

Das Kompartiment 2a ist mit dem Kompartiment 1 über ein Verbindungsrohr 53 verbunden, das mit seinem oberen Ende die Trennwand 5 durchgreift und mit seinem unteren Ende im bodennahen Bereich 54 des Kompartiments 2 endet. Dieser Bereich enthält eine Aktivkohle-Schüttung und erstreckt sich über die gesamte Querschnittsfläche des Kompartiments 2a. Die beiden Kompartimente 2a und 2b stehen über die flüssigkeits- und gasdurchlässige Trennwand 50 miteinander in Verbindung.

Das Kompartiment 2b ist mit dem Kompartiment 3 durch ein Überlaufrohr 14 verbunden, dessen unteres Ende oberseits in dem Kompartiment 3 mündet und dessen oberes Ende in dem sich zwischen der Aktivkohle-Schüttung 11 und der Trennwand 5 befindlichen Zwischenraum 51 endet.

Die Funktionsweise der in Fig. 6 dargestellten Vorrichtung ist folgende:

Die aus dem Filterkorb 6 ablaufende Flüssigkeit gelangt über das Verbindungsrohr 53 in den Bereich 54 des Kompartiments 2a und von dort über die Trennwand 50 in das Kompartiment 2b. Die Kompartimente 2a und 2b und die sich darin befindlichen Aktivkohle-Schüttungen 11 sind mit Flüssigkeit überstaut. Von Kompartiment 2b schließlich gelangt die Flüssigkeit über das Überlaufrohr 14 ins Kompartiment 3.

Im Kompartiment 2a findet wie im Kompartiment 2 der weiter oben beschriebenen Ausführungsbeispiele ein Abbau von organischen Verbindungen unter gleichzeitiger Nitratreduktion (Denitrifikation) in Kompartiment 2b dagegen ein aerober Abbau statt. Der Vorteil des zusätzlichen Kompartiments 2b wurde bereits weiter oben beschrieben.

Bei der Vorrichtung gemäß Fig. 6 wird die Aktivkohle-Schüttung 11 des Kompartiments 2a von unten her angeströmt. Der Vorteil dieser Anströmungsart, die im übrigen auch bei den oben beschriebenen Ausführungsbeispielen anwendbar ist, liegt darin, daß die mit der Flüssigkeit mitgeführten Feststoff- und Schlammpartikel sich in dem Bereich 54 unterhalb der Aktivkohle-Schüttung 11 absetzen können. Durch eine in diesem Bereich angebrachte Auslaßleitung 64 können Schlammansammlungen von dort durch Öffnen des Ventils 65 leicht entfernt werden. Dies kann bei Bedarf auch unabhängig von den tumusmäßigen Wartungsarbeiten erfolgen. Bei einer Anströmung der Aktivkohle-Schüttung 11 von oben können die Feststoff- bzw. Schlammpartikel sich auf der Aktivkohle-Schüttung 11 absetzen und sie nach Art eines Filterkuchens abdichten.

Auf dem Boden 9 des Filterkorbes 6 ist eine Filterschicht 55 aus einem verrottbaren Material angeordnet. Als besonders vorteilhaft haben sich Strohpreßlinge erwiesen. Eine derartige Filterschicht wird durch den biologischen Abbau unter Bildung von neuen Durchtrittskanälen in fortschreitendem Maße aufgelockert, so daß die Abdichtung von bereits vorhandenen Durchtrittskanälen mit Feststoffpartikeln dadurch kompensiert wird. Als vorteilhaft hat sich eine etwa 2 cm hohe Schicht aus Strohpreßlingen mit folgenden Parametern erwiesen:

| | |
|---|---|
| Schüttvolumen, trocken: | 500 g/l |
| Wasseraufnahme: | 2 l/l bzw. 4 l/kg |
| Dichte, gequollen: | ca. 1 kg/l |
| Faserlänge, gequollen: | 1 - 5 mm |

Fig. 7 und Fig. 8 zeigen Ausführungsbeispiele einer erfindungsgemäßen Vorrichtung mit einer andersartigen Anordnung der Kompartimente 1,2a,2b und 3. Während die Kompartimente 2a und 2b, wie in dem Ausführungsbeispiel gem. Fig.6, unverändert übereinander angeordnet sind, ist das Kompartiment 3 seitlich davon angeordnet. Die Kompartimente 2a, 2b und 3 sind in einem gemeinsamen Behälter 56 angeordnet und durch eine Stauwand 57 voneinander getrennt.

Das Kompartiment 1 befindet sich in einem separaten Behälter 58, der seitlich am Behälter 56 und so angeordnet ist, daß sich sein Boden 66 oberhalb des Flüssigkeits-Spiegels 59 des Behälters 56 befindet. Das Kompartiment 1 ist mit dem Kompartiment 2a über ein Verbindungsrohr 53 verbunden. Dieses zweigt in Bodennähe vom Behälter 58 ab und mündet unerhalb der Aktivkohleschüttung 11 des Kompartiments 2a. Die Aktivkohleschüttung 11 wird also auch bei diesem Ausführungsbeispiel vorteilhaft von unten angeströmt. Die Höhe der Stauwand 57 ist kleiner als die Höhe der Wassersäule im Behälter 56.

In dem Ausführungsbeispiel gemäß Fig. 8 sind auch die Kompartimente 2a und 2b nebeneinander in dem Behälter 56 angeordnet. Die beiden Kompartimente sind durch 2 parallel und mit Abstand zueinander angeordnete vertikale Wände 60,61 voneinander getrennt. Die Höhe der Wand 60 ist geringer als die Höhe der Flüssigkeitssäule im Behälter 56, die Höhe der Wand 61 dagegen größer. An ihrem bodennahen Ende weist die Wand 61 wenigstens eine Durchbrechung 62 auf. Die beiden Wände 61 und 62 bilden somit einem die beiden Kompartimente 2a und 2b verbindenden Kanal, den die Flüssigkeit aus dem Kompartiment in Pfeilrichtung 63 durchströmt.

Der Vorteil der Anordnungen gemäß Fig. 7 und Fig. 8 besteht vor allen Dingen darin, daß die einzelnen Kompartimente für Wartungs- und Reinigungsarbeiten von oben her leicht zugänglich sind. Sie werden vorteilhafterweise überall dort eingesetzt ist, wo wenig Einbauhöhe zur Verfügung steht oder wo ein Einbau ins Erdreich erforderlich ist. Vor allen Dingen im letztgenannten Fall ist die Zugänglichkeit von oben ein wesentlicher Vorteil.

In den folgenden Tabellen 2 und 3 sind zwei Auslegungsbeispiele angegeben. Zugrundegelegt wurde jeweils ein Zulauf, der mit 6100 mg/l CSB und mit einem Gesamtstickstoffgehalt von 1500 mg/l belastet ist. Bei einer Verweilzeit von 3 Tagen wird in beiden Fällen eine Verringerung des CSB-Wertes um ca. 95 % und des Gesamtstickstoffgehaltes um ca. 88 % erreicht.

Tabelle 2

|  | CSB [mg/l] | N ges [mg/l] |
|---|---|---|
| Zulauf | 6100 | 1500 |
| Ablauf | 300 | 180 |
| Raumbelastung | 1800 mg/l d *) | 660 mg/l d |
| Umwälzrate | 5/d | |
| Reaktorvolumen | 400 l | |
| Feststoffkompartiment | 100 l | |
| Anoxisches Kompartiment | 100 l | |
| Aerobkompartiment | 200 l | |
| Verweilzeit | 3 d | |

*) Dieser Wert bezieht sich auf den Gesamtgehalt an gelösten und festen sauerstoffzehrenden Substanzen; letztere werden hauptsächlich im Feststoffkompartiment abgebaut.

Tabelle 3

|  | CSB [mg/l] | N ges [mg/l] |
|---|---|---|
| Zulauf | 6100 | 1500 |
| Ablauf | 300 | 180 |
| Raumbelastung | 1933 mg/l d *) | 660 mg/l d |
| Umwälzrate | 5/d | |
| Reaktorvolumen | 40 l | |
| Feststoffkompartiment | 22 l | |
| Anoxisches Kompartiment | 6 l | |
| Aerobkompartiment | 12 l | |
| Verweilzeit | 3 d | |

*) Dieser Wert bezieht sich auf den Gesamtgehalt an gelösten und festen sauerstoffzehrenden Substanzen; letztere werden hauptsächlich im Feststoffkompartiment abgebaut.

Eine erfindungsgemäße Vorrichtung mit der Auslegung nach Tabelle 2 ist beispielsweise für die Verwendung in einem Reisezugwagen geeignet. Der Ablauf weist CSB- und Stickstoffwerte auf, die es erlauben, die Flüssigkeit direkt, vorzugsweise während der Fahrt, ins Erdreich abzugeben. Das die Feststoffe zurückhaltende und vorwiegend aerob abbauende Kompartiment 1 ist so ausgelegt, daß die Wartungsintervalle zur Entleerung und Reinigung einige Monate

**EP 0 654 015 B1**

betragen. Der Vorratsbehälter herkömmlicher Toilettenanlagen in Reisezugwagen muß dagegen in Abständen von einigen Tagen entleert werden.

Die erfindungsgemäße Vorrichtung eignet sich auch für andere Fahrzeuge wie Wohnmobile, Flugzeuge und Schiffe. Ebenso ist ein Einsatz in Gebäuden denkbar, die an keine Kanalisation anschließbar sind, wie im Falle von Garten- oder Wochenendhäusern. Es ist auch denkbar, die erfindungsgemäße Vorrichtung für mobile Toilettenanlagen zu verwenden, die beispielsweise bei Großbaustellen und Veranstaltungen eingesetzt werden können. Ebenso ist es denkbar, die erfindungsgemäße Vorrichtung an eine oder mehrere Vakuumtoiletten anzuschließen.

Bezugszeichenliste

| | |
|---|---|
| 1 | aerobes Kompartiment |
| 2 | anoxisches Kompartiment |
| 2a | anoxisches Kompartiment |
| 2b | aerobes Kompartiment |
| 3 | aerobes Kompartiment |
| 4 | Bioreaktor |
| 5 | Trennwand |
| 6 | Filterkorb |
| 7 | Filterkuchen |
| 8 | Seitenwand |
| 9 | Boden |
| 10 | Teil |
| 11 | Aktivkohle-Schüttung |
| 12 | Trägerstruktur |
| 13 | Trennwand |
| 14 | Überlaufrohr |
| 15 | Trägerstruktur |
| 16 | Boden |
| 17 | Belüftungsmittel |
| 18 | Seitenwand |
| 19 | Abflußöffnung |
| 20 | Umwälzleitung |
| 21 | Umwälzpumpe |
| 22 | Auslaßleitung |
| 23,23' | Ventil |
| 24 | Hygienisierungs- und Filtereinheit |
| 25 | Sammelleitung |
| 26 | Luftverteiler |
| 27 | Rohr |
| 28 | Seitenfläche |
| 29 | Durchflußöffnung |
| 30 | Toilette |
| 31 | Zuführleitung |
| 32 | Spülwasserleitung |
| 33 | Vorratsbehälter |
| 34 | Hygienisierungseinrichtung |
| 35 | Filter |
| 36 | Pumpe |
| 37 | Crossflow-Filter |
| 38 | Eingang |
| 39 | Permeatausgang |
| 40 | Retentatausgang |
| 41 | Hauptstromleitung |
| 42 | Permeatleitung |
| 43 | Retentatleitung |
| 44 | Hauptstrompumpe |
| 45 | Ventil |
| 46 | Ventil |

| | |
|---|---|
| 47 | Umwälzleitung |
| 48 | Pfeil |
| 49 | Leitung |
| 50 | Trennwand |
| 51 | Zwischenraum |
| 52 | Zwischenraum |
| 53 | Verbindungsrohr |
| 54 | Bereich |
| 55 | Filterschicht |
| 56 | Behälter |
| 57 | Stauwand |
| 58 | Behälter |
| 59 | Flüssigkeits-Spiegel |
| 60 | Wand |
| 61 | Wand |
| 62 | Durchbrechung |
| 63 | Pfeilrichtung |
| 64 | Auslaßleitung |
| 65 | Ventil |
| 66 | Boden |

**Patentansprüche**

1. Verfahren zur biologischen Behandlung von organisch belastetem Abwasser und organischen Abfällen mit folgenden Verfahrensschritten:

   a) Abtrennung des Feststoffanteils und Abbau des Feststoffanteils in einer ersten Abbaustufe (1) unter vorwiegend aeroben Bedingungen,
   b) Weiterleitung des flüssigen Anteils in eine zweite Abbaustufe (2), in der ein Abbau unter anoxischen Bedingungen erfolgt,
   c) Weiterleitung des flüssigen Anteils aus der zweiten Abbaustufe in eine dritte Abbaustufe (3), in der ein Abbau unter aeroben Bedingungen erfolgt, und
   d) stetige Umwälzung durch Rückführung des flüssigen Anteils aus der dritten Abbaustufe (3) in die erste Abbaustufe (1).

2. Verfahren nach Anspruch 1,
      dadurch gekennzeichnet,
   daß zumindest in der zweiten (2,2a) und dritten Abbaustufe (3) biologisch aktive Trägerstrukturen (11,12,15) vorhanden sind.

3. Verfahren nach Anspruch 2,
      dadurch gekennzeichnet,
   daß zumindest in der zweiten Abbaustufe (2,2a) eine Trägerstruktur (12) vorhanden ist, die poröse Mineralstoffteilchen und/oder Aktivkohleteilchen enthält.

4. Verfahren nach Anspruch 2,
      dadurch gekennzeichnet,
   daß in der zweiten Abbaustufe (2,2a) eine Aktivkohle-Schüttung (11) vorhanden ist.

5. Verfahren nach Anspruch 4,
      dadurch gekennzeichnet,
   daß in der zweiten Abbaustufe (2,2a) zusätzlich eine Trägerstruktur (12) nach Anspruch 3 vorhanden ist.

6. Verfahren nach einem der Ansprüche 1 bis 5,
      dadurch gekennzeichnet,
   daß es für die biologische Reinigung von Toilettenabwasser vorgesehen ist und die Flüssigkeit aus der dritten Abbaustufe als Spülflüssigkeit für die Toiletten verwendet wird, wobei vorzugsweise die Flüssigkeit aus der dritten Abbaustufe (3) vor ihrer Verwendung als Toilettenspülflüssigkeit bzw. vor ihrer Abgabe in die Umwelt gefiltert und entkeimt wird und die Entkeimung vorzugweise durch UV-Bestrahlung, Pasteurisierung, anodische Oxidation oder durch eine Mikro- oder Ultrafiltration, insbesondere eine Crossflow-Filtration erfolgt.

7. Verfahren nach einem der vorgenannten Ansprüche 1 bis 6,
   gekennzeichnet durch
   eine vierte Abbaustufe (2b),

   - die zwischen der zweiten Abbaustufe (2,2a) und der dritten Abbaustufe (3) zwischengeschaltet ist, und
   - in der ein Abbau unter aeroben Bedingungen erfolgt.

8. Verfahren nach Anspruch 7,
   dadurch gekennzeichnet,
   daß als Trägerstruktur eine Aktivkohle-Schüttung (11) vorhanden ist und daß neben der Aktivkohle-Schüttung (11) zusätzlich eine Trägerstruktur nach Anspruch 3 vorhanden sein kann.

9. Vorrichtung zur biologischen Behandlung von organisch belastetem Abwasser und organischen Abfällen,
   gekennzeichnet durch

   a) ein erstes Kompartiment (1), in dem die Festtoffanteile des zu behandelnden organischen Substrats abgetrennt werden - und unter vorwiegend aeroben Bedingungen abbaubar sind,
   b) ein zweites, mit dem ersten Kompartiment in Verbindung stehendes Kompartiment (2), in dem biologisch aktive Trägerstrukturen angeordnet sind und in dem die von Feststoffanteilen im wesentlichen befreite Flüssigkeit anaerob abbaubar ist,
   c) ein drittes mit dem zweiten in Verbindung stehendes Kompartiment (3) in dem biologisch aktive Trägerstrukturen angeordnet sind und in dem die Flüssigkeit aerob abbaubar ist, und
   d) Mittel zum stetigen Rückführen der Flüssigkeit aus dem dritten Kompartiment (3) in das erste Kompartiment (1).

10. Vorrichtung nach Anspruch 9,
    dadurch gekennzeichnet,
    daß die drei Kompartimente (1,2,3) untereinander angeordnet sind.

11. Vorrichtung nach Anspruch 9 oder 10,
    dadurch gekennzeichnet,
    daß im zweiten Kompartiment (2) eine biologisch aktive Trägerstruktur (12) angeordnet ist, die aus einem Kunststoff-Sintermaterial besteht, wobei vorzugweise in das Kunststoff-Sintermaterial poröse Mineralstoffteilchen und/oder Aktivkohleteilchen eingelagert sind.

12. Vorrichtung nach Anspruch 9 oder 10,
    dadurch gekennzeichnet,
    daß im zweiten Kompartiment (2) eine Schüttung (11) aus Aktivkohle angeordnet ist und daß zusätzlich eine Trägerstruktur (12) gemäß den Ansprüchen 15 und 16 vorhanden sein kann, die vorzugsweise oberhalb der Aktivkohle-Schüttung (11) angeordnet ist.

13. Vorrichtung nach einem oder mehreren der Ansprüche 10 bis 12,
    dadurch gekennzeichnet,
    daß das zweite Kompartiment (2) mit dem sich darunter angeordneten dritten Kompartiment (3) durch ein im Kompartiment (2) angeordnetes, sich nahezu über dessen gesamte Höhe erstreckendes Überlaufrohr verbunden ist.

14. Vorrichtung nach einem oder mehreren der Ansprüche 9 bis 13,
    dadurch gekennzeichnet,
    daß im ersten Kompartiment (1) ein Filterkorb (6) zum Zurückhalten der Feststoffanteile angeordnet ist, wobei der Filterkorb (6) insbesondere aus Drahtgewebe oder aus einem Kunststoff-Sintermaterial, vorzugsweise mit darin eingelagerten porösen Teilchen aus Mineralstoffen und/oder Aktivkohle, besteht.

15. Vorrichtung nach einem der Ansprüche 9 bis 14,
    dadurch gekennzeichnet,

daß im dritten Kompartiment (3) Mittel (17) zum Einblasen von Luft in die darin enthaltene Flüssigkeit angeordnet sind und daß vorzugsweise Mittel (25,26) vorhanden sind, mit denen die aus der Flüssigkeit des dritten Kompartiments (3) entweichende Luft in das erste Kompartiment (1) überführbar und dort innerhalb des Filterkorbes (6) verteilbar ist.

16. Vorrichtung nach einem der Ansprüche 9 bis 15,
    dadurch gekennzeichnet,
    daß die Trägerstrukturen (15) des dritten Kompartiments (3) im wesentlichen aus einem Kunststoff-Sintermaterial bestehen, in das poröse Mineralstoffteilchen und/oder Aktivkohleteilchen eingelagert sind.

17. Vorrichtung nach einem der Ansprüche 9 bis 16,
    dadurch gekennzeichnet,
    daß das erste Kompartiment (1) mit wenigstens einer Toilette (30) verbunden ist und daß die Flüssigkeit aus dem Kompartiment (3) unter Verwendung als Spülflüssigkeit für die wenigstens eine Toilette (30) in das erste Kompartiment (1) zurückführbar ist.

18. Vorrichtung nach einem oder mehreren der Ansprüche 9 bis 17,
    gekennzeichnet durch
    wenigstens eine Filter- und Hygienisierungseinheit (24,34,35) zur Filterung und Entkeimung der aus dem dritten Kompartiment (3) stammenden und zum Spülen in die Toilette (30) bzw. in die Umwelt geleiteten Flüssigkeit, wobei beispielsweise die Filter- und Hygienisierungseinrichtung durch eine Crossflow-Filtereinrichtung (37) gebildet ist oder die Hygienisierungseinrichtung (34) eine Vorrichtung zur UV-Bestrahlung, Pasteurisierung oder anodischen Oxidation enthält.

19. Vorrichtung nach einem der Ansprüche 9 bis 18,
    gekennzeichnet durch
    ein viertes, aerobe Abbaubedingungen aufweisendes Kompartiment (2b), dessen Zulaufseite mit dem zweiten Kompartiment (2a) und dessen Ablaufseite mit dem dritten Kompartiment (3) in fluidischer Verbindung steht.

20. Vorrichtung nach Anspruch 19,
    dadurch gekennzeichnet,
    daß das vierte Kompartiment (2b) oberhalb des zweiten Kompartiments (2a) angeordnet ist und Mittel (17) zum Einblasen von Luft vorgesehen sind, daß das Kompartiment (2b) als biologisch aktive Trägerstruktur eine Aktivkohle-Schüttung (11) enthält und daß zusätzlich eine Trägerstruktur (12) aus einem Kunststoff-Sintermaterial mit darin eingelagerten porösen Teilchen aus Mineralstoffen und/oder Aktivkohle vorhanden sein kann.


## Claims

1. Process for the biological treatment of organically polluted waste water and organic wastes having the following process steps:

   a) separating off the solids portion and degradation of the solids portion in a first degradation stage (1) under predominantly aerobic conditions,
   b) passing on the liquid portion into a second degradation stage (2), in which degradation proceeds under anoxic conditions,
   c) passing on the liquid portion from the second degradation stage into a third degradation stage (3), in which degradation proceeds under aerobic conditions, and
   d) continuous recirculation by returning the liquid portion from the third degradation stage (3) to the first degradation stage (1).

2. Process according to Claim 1, characterized in that biologically active support structures (11,12,15) are present at least in the second (2,2a) and third degradation stage (3).

3. Process according to Claim 2, characterized in that a support structure (12) is present at least in the second degradation stage (2,2a), which support structure contains porous mineral particles and/or activated charcoal particles.

4. Process according to Claim 2, characterized in that an activated charcoal bed (11) is present in the second degradation stage (2,2a).

5. Process according to Claim 4, characterized in that a support structure (12) according to Claim 3 is additionally present in the second degradation stage (2,2a).

6. Process according to one of Claims 1 to 5, characterized in that it is intended for the biological purification of toilet waste water, and the liquid from the third degradation stage is used as flushing liquid for the toilets, the liquid from the third degradation stage (3) preferably being filtered and sterilized prior to its use as toilet flushing water or prior to its discharge into the environment, and the sterilization preferably being carried out by UV irradiation, pasteurization, anodic oxidation or by microfiltration or ultrafiltration, in particular crossflow filtration.

7. Process according to one of the preceding Claims 1 to 6, characterized by a fourth degradation stage (2b),

   - which is connected between the second degradation stage (2,2a) and the third degradation stage (3), and
   - in which degradation proceeds under aerobic conditions.

8. Process according to Claim 7, characterized in that an activated charcoal bed (11) is present as support structure and in that, besides the activated charcoal bed (11), a support structure according to Claim 3 can additionally be present.

9. Device for the biological treatment of organically polluted waste water and organic wastes, characterized by

   a) a first compartment (1) in which the solids portions of the organic substrate to be treated are separated off - and can be degraded under predominantly aerobic conditions,
   b) a second compartment (2) connected to the first compartment, in which second compartment biologically active support structures are arranged and in which the liquid which is substantially freed from solids portions can be degraded anaerobically,
   c) a third compartment (3) connected to the second compartment, in which third compartment biologically active support structures are arranged and in which the liquid can be degraded aerobically, and
   d) means for the continuous return of the liquid from the third compartment (3) to the first compartment (1).

10. Device according to Claim 9, characterized in that the three compartments (1,2,3) are arranged one below the other.

11. Device according to Claim 9 or 10, characterized in that a biologically active support structure (12) is arranged in the second compartment (2), which support structure (12) comprises a sintered plastic material, porous mineral particles and/or activated charcoal particles preferably being incorporated into the sintered plastic material.

12. Device according to Claim 9 or 10, characterized in that a bed (11) of activated charcoal is disposed in the second compartment (2) and in that a support structure (12) according to Claims 15 and 16 can additionally be present which is preferably disposed above the activated charcoal bed (11).

13. Device according to one or more of Claims 10 to 12, characterized in that the second compartment (2) is connected to the third compartment (3) disposed beneath it by an overflow pipe disposed in the compartment (2) extending over almost its entire height.

14. Device according to one or more of Claims 9 to 13, characterized in that a filter basket (6) for retaining the solids portions is disposed in the first compartment (1), the filter basket (6) in particular comprising wire cloth or a sintered plastic material, preferably having, incorporated therein, porous particles of mineral fibres and/or activated charcoal.

15. Device according to one of Claims 9 to 14, characterized in that means (17) for injecting air into the liquid contained in the third compartment (3) are disposed therein and in that, preferably, means (25,26) are present by which the air escaping from the liquid of the third compartment (3) can be transferred into the first compartment (1) and can there be distributed within the filter basket (6).

16. Device according to one of Claims 9 to 15, characterized in that the support structures (15) of the third compartment (3) essentially comprise a sintered plastic material into which porous mineral particles and/or activated charcoal particles are incorporated.

17. Device according to one of Claims 9 to 16, characterized in that the first compartment (1) is connected to at least one toilet (30) and in that the liquid from the compartment (3), being used as flushing liquid for the at least one toilet (30), can be returned into the first compartment (1).

18. Device according to one or more of Claims 9 to 17, characterized by at least one filtering and sanitizing unit (24,34,35) for filtering and sterilizing the liquid originating from the third compartment (3) and passed to the toilet (30) for flushing or to the environment, the filtering and sanitizing apparatus being formed by a crossflow filter apparatus (37), for example, or the sanitizing apparatus (34) containing a device for UV irradiation, pasteurization or anodic oxidation.

19. Device according to one of Claims 9 to 18, characterized by a fourth compartment (2b) which has aerobic degradation conditions and the inlet side of which is flow-connected to the second compartment (2a) and the outlet side of which is flow-connected to the third compartment (3).

20. Device according to Claim 19, characterized in that the fourth compartment (2b) is disposed above the second compartment (2a) and means (17) for injecting air are provided, in that the compartment (2b) contains an activated charcoal bed (11) as biologically active support structure and in that a support structure (12) made of a sintered plastic material having porous particles of minerals and/or activated charcoal incorporated therein can additionally be present.

**Revendications**

1. Procédé pour le traitement biologique d'eaux usées à charge organique, et de déchets organiques, comprenant les étapes de procédé suivantes :

    a) on sépare les parties de matières solides et on décompose les parties de matières solides dans un premier étage de décomposition (1) sous des conditions principalement aérobiques,

    b) on transfère la partie liquide dans un second étage de décomposition (2), dans lequel se produit une décomposition sous des conditions anaérobiques,

    c) on transfère la partie liquide du second étage de décomposition dans un troisième étage de décomposition (3), dans lequel se produit une décomposition sous des conditions aérobiques, et

    d) on fait un recyclage en permanence par recirculation de la partie liquide hors du troisième étage de décomposition (3) dans le premier étage de décomposition (1).

2. Procédé selon la revendication 1, caractérisé en ce que des structures porteuses actives sur le plan biologique (11, 12, 15) sont prévues au moins dans le second (2, 2a) et dans le troisième étage de décomposition (3).

3. Procédé selon la revendication 2, caractérisé en ce qu'une structure porteuse (12) est prévue au moins dans le second étage de décomposition (2, 2a), laquelle contient des particules minérales poreuses et/ou des particules de charbon actif.

4. Procédé selon la revendication 2, caractérisé en ce que dans le second étage de décomposition (2, 2a) est prévu un remplissage (11) en charbon actif.

5. Procédé selon la revendication 4, caractérisé en ce qu'il est prévu dans le second étage de décomposition (2,2a) une structure porteuse additionnelle (12) selon la revendication 3.

6. Procédé selon l'une quelconque des revendications 1 à 5, caractérisé en ce qu'il est prévu pour le nettoyage biologique d'eaux usées de toilettes et que le liquide provenant du troisième étage de décomposition est utilisé comme liquide de rinçage pour les toilettes, et le liquide du troisième étage de décomposition (3) est de préférence filtré et débarrassé de ses germes avant son utilisation comme liquide de rinçage de toilettes ou avant son évacuation dans l'environnement, la suppression des germes ayant lieu de préférence par exposition aux rayons ultraviolets, pasteurisation, oxydation anodique, ou par micro-filtration ou ultra-filtration, en particulier une filtration à courants croisés.

7. Procédé selon l'une quelconque des revendications précédentes 1 à 6, caractérisé par :
   un quatrième étage de décomposition (2b),

   - qui est interposé entre le second étage de décomposition (2, 2a) et le troisième étage de décomposition (3), et
   - dans lequel a lieu une décomposition sous des conditions aérobiques.

8. Procédé selon la revendication 7, caractérisé en ce qu'il est prévu comme structure porteuse un remplissage en charbon actif (11) et en ce qu'il peut être prévu, outre le remplissage en charbon actif (11) en supplément une structure porteuse selon la revendication 3.

9. Appareil pour le traitement biologique d'eaux usées à charge organiques et de déchets organiques, caractérisé par :

   a) un premier compartiment (1), dans lequel les parties de matières solides du substrat organique à traiter sont séparées, et peuvent être décomposées sous des conditions principalement aérobiques,

   d) un second compartiment (2), en communication avec le premier compartiment, dans lequel sont agencées des structures porteuses biologiquement actives, et dans lequel le liquide essentiellement libéré des parties de matières solides peut être décomposé de manière anaérobique,

   c) un troisième compartiment (3) en communication avec le second compartiment, dans lequel sont agencées des structures porteuses biologiquement actives et dans lequel le liquide peut être décomposé de manière aérobique, et

   d) des moyens pour faire constamment recycler le liquide provenant du troisième compartiment (3) vers le premier compartiment (1).

10. Appareil selon la revendication 9, caractérisé en ce que les trois compartiments (1, 2, 3) sont agencés les uns au-dessous des autres.

11. Appareil selon l'une ou l'autre des revendications 9 et 10, caractérisé en ce que dans le second compartiment (2) est agencée une structure porteuse biologiquement active (12), qui est constituée d'un matériau fritté en matière plastique, et des particules minérales poreuses et/ou des particules de charbon actif sont noyées de préférence dans le matériau fritté en matière plastique.

12. Appareil selon l'une ou l'autre des revendications 9 et 10, caractérisé en ce que dans le second compartiment (2) est agencé un remplissage (11) en charbon actif, et en ce qu'il peut être prévu en supplément une structure porteuse (12) selon les revendications 15 et 16, laquelle est de préférence agencée au-dessus du remplissage en charbon actif (11).

13. Appareil selon l'une ou plusieurs des revendications 10 à 12, caractérisé en ce que le second compartiment (2) et le troisième compartiment (3) agencé au-dessous de lui-même, sont reliés par un tube de trop-plein agencé dans le compartiment (2) et s'étendant pratiquement sur la totalité de leur hauteur.

14. Appareil selon l'une plusieurs des revendications 9 à 13, caractérisé en ce que dans le premier compartiment (1) est agencé un panier filtrant (6) pour retenir les parties de matières solides, le panier filtrant (6) étant en particulier constitué d'un tissu de fils ou d'un matériau fritté en matière plastique, de préférence dans lequel sont noyées des particules poreuses de matières minérales et/ou de charbon actif.

15. Appareil selon l'une quelconque des revendications 9 à 14, caractérisé en ce que dans le troisième compartiment (3) sont agencés des moyens (17) pour souffler de l'air dans le liquide contenu dans celui-ci, et en ce qu'il est prévu de préférence des moyens (25, 26) avec lesquels l'air qui s'échappe hors du liquide du troisième compartiment (3) peut être transféré jusque dans le premier compartiment (1) et peut être réparti dans celui-ci à l'intérieur du panier filtrant (6).

**16.** Appareil selon l'une quelconque des revendications 9 à 15, caractérisé en ce que les structures porteuses (15) du troisième compartiment (3) sont essentiellement constituées de matériau fritté en matière plastique dans lequel sont noyées des particules de matières minérales et/ou des particules de charbon actif.

**17.** Appareil selon l'une quelconque des revendications 9 à 16, caractérisé en ce que le premier compartiment (1) est relié à au moins une toilette (30), et en ce que le liquide provenant du compartiment (3) est susceptible d'être retourné dans le premier compartiment (1) en étant utilisé comme liquide de rinçage pour ladite au moins une toilette (30).

**18.** Appareil selon l'une ou plusieurs des revendications 9 à 17, caractérisé par au moins une unité de filtration et d'hygiénisation (24, 34, 35) pour filtrer et supprimer les germes du liquide provenant du troisième compartiment (3) et l'amener pour le rinçage dans la toilette (30) ou dans l'environnement, ladite l'unité de filtration et d'hygiénisation étant formée par exemple par une unité de filtration à courants croisés (37) et, ou bien l'unité d'hygiénisation (34) contient un dispositif d'application de rayons ultraviolets, de pasteurisation ou d'oxydation anodique.

**19.** Appareil selon l'une quelconque des revendications 9 à 18, caractérisé par un quatrième compartiment (2b) dans lequel règnent des conditions de décomposition aérobiques, dont le côté d'admission communique, vis-à-vis du fluide, avec le second compartiment (2a), et dont le côté de sortie communique avec le troisième compartiment (3).

**20.** Appareil selon la revendication 19, caractérisé en ce que le quatrième compartiment (2b) est agencé au-dessus du second compartiment (2a), et en ce qu'il est prévu des moyens (17) pour souffler de l'air, en ce que le compartiment (2b) contient comme structure porteuse biologiquement active un remplissage de charbon actif (11), et en ce qu'il peut être prévu en supplément une structure porteuse (12) en matériau fritté en matière plastique, dans lequel sont noyées des particules poreuses de matières minérales et/ou de charbon actif.

FIG.1

EP 0 654 015 B1

FIG.2

EP 0 654 015 B1

20

FIG.3

EP 0 654 015 B1

FIG.4

FIG.5

FIG.6

FIG.7

FIG.8